# EUROPEAN PATENT APPLICATION

(11) **EP 4 287 054 A1**
(43) Date of publication of application: **06.12.2023**
(21) Application number: 22177232.0
(22) Date of filing: 03.06.2022
(51) Int. Cl.: G06F 21/57, G06F 21/53

(54) **COMPUTER IMPLEMENTED METHOD FOR UPDATING A SAFETY SOFTWARE CODE, COMPUTER HARDWARE DEVICE, COMPUTER PROGRAM AND A COMPUTER-READABLE MEDIUM**

(71) Applicant: Siemens Aktiengesellschaft, 80333 München (DE)
(72) Inventor: BUCHHOLZ, Stephan, 81739 München (DE); Fiege, Ludger, 85567 Grafing (DE); GERSCH, Roland, 80686 München (DE)
(74) Representative: Siemens Patent Attorneys

(57) **Abstract**

The invention is related to a Computer-implemented method for updating a safety software code (6) providing a safety function (7) to a computing hardware device (1) comprising the steps of executing a host module (9) by the computing hardware device (1), wherein a first environment (10) and a second environment (11) are operated in isolation from each other by the host module (9); reception of an update package (14) by a reception software (13) operated in the first environment (10); verification of a fulfilment of predefined update conditions by the update package (14) by an update software (18) operated in the second environment (11), wherein the verification of the fulfilment of the predefined update conditions; inclusion of the update code element (15) into the safety software code (6) in the second environment (11) by the update software (18).

## Description

The present invention is directed to a computer implemented method for updating a safety software code, a computer hardware device configured to operate a computer implemented method for updating a safety software code, a computer program and a computer-readable medium.

Computer hardware devices configured to operate computer-controlled machines, such as robots, must be safe and secure. Safety of a computer hardware device is related to a functional safety. Functional safety is ensured by means of safety functions operated by the computer hardware devices. Security is related to a protection of the computing hardware device and of a software executed on the hardware against manipulation and access by unauthorized users.

To fulfill both requirements it is common to run safety functions on computer hardware devices that are isolated from other computer hardware devices and network interfaces of the computer-controlled machine. Therefore, it is not possible to manipulate the safety function by malicious code, sent to a network interface of the robot. A drawback of the isolation of the computer hardware device running the safety function is the fact that it is not possible to update the safety function over the air. To update the safety function, an authorized user has to update the safety function at a hardware interface of the computing hardware device operating the safety function. The lack of fast and easy update mechanisms may restrict the safety and security of the computing hardware device.

It is an object of the present invention to provide a method for secure automatic and remote updating of safety functions in a variety of computing hardware device.

This objective is achieved by the respective subject-matter of the independent claims. Preferred embodiments and further implementations are subject-matter of the dependent claims.

A first aspect of the invention is related to a computer implemented method for updating a safety software code providing a safety function to a computing hardware device.

The safety software code may comprise instructions for the computing hardware device to operate the safety function. The computing hardware device may be configured to control a computer-controlled machine, such as a robot, a vehicle or another computer-controlled device in order to provide the safety function. The safety function may be configured to monitor predefined parameters during an operation of the computer-controlled device by the computing hardware device and to perform predefined tasks depending on the parameters.

The computing hardware device may provide a host module. The host module may be designed as a hardware unit, a hypervisor or another hardware-based or software-based module, configured a provision of hardware resources and/or software resources to certain modules, environments or processes. The hypervisor may be configured as a native hypervisor operated directly on the computing hardware device or as a hosted hypervisor operated in an operation system. The hypervisor may be designed as a virtual machine monitor or a virtualizer that is configured to host virtual machines running on the computing hardware device. The host module host module is configured to provide memory resources for example memory sections of a memory of the computing hardware device to the environments. A first environment and a second environment are operated in isolation from each other by the host module. In other words, the host module is providing hardware resources of the computing hardware device to the first environment and the second environment, wherein the first environment and the second environment are run as independent, non-overlapping environments. As an example, the host module may be designed as the hypervisor, running the first environment and the second environment as a first virtual machine and a second virtual machine. A safe memory resource of the computing hardware device is solely provided and made accessible to the second environment by the host module. In other words, the host module provides the safe memory resource to the second environment, wherein the first environment has no access to the safe memory resource. The safe memory resource may be designed as a memory section or a memory device of the computing hardware device or a network memory. The term safe indicates that an integrity of the memory resource is assured. Mechanisms to check the integrity ("safety") of that memory resource at runtime may be implemented according to the established state of the art and the required safety integrity level, and not further considered here. As the access to the safe memory resource is restricted to the second environment, it is not possible that software, running in the first environment may read, write or execute code of the safe memory resource.

An update package is received by a reception software operated in the first environment. The update package comprises an update code element to update the safety software code and a signature of the update code element. In other words, in order to update the safety software code in the second environment the update package is provided to the reception software running in the first environment. The update package comprises the update code element necessary to update the safety software code.

In order to update the safety software code, it is necessary to add the update code element to the safety software code or to replace a code element of the safety software code by the update code element or to remove an outdated code element of the safety software code. To prevent an inclusion of malicious code elements to the safety software code, the update package comprises a signature of the update code element. The signature is unique for the specific update code element or a hash of the specific update code element of the update package. The signature for the specific update code element may be generated by means of a keychain comprising at least a root signature key. The signature may be generated by means of a private root signature key of the keychain or by a private certifier key of the keychain that may be digitally signed by the private root key. By means of the corresponding public root signature key of the keychain, it is possible to verify the signature. The verification of the signature guarantees that the update code element was not changed after the signature of the update code element and that the update code element is generated by a certified provider having access to the private root signature key.

The update package is provided to an exchange resource of the computing hardware device by the reception software. The exchange resource is provided and made accessible to the first environment and the second environment by the host module. In other words, the host module gives access to the exchange resource of the computing hardware device to both virtual machines. Therefore, it is possible that both virtual machines may read, write or run code stored in the exchange resource. The update package is transferred to the exchange resource to provide the update package to the second environment. The exchange resource may be designed as a exchange resource of the computing hardware device or a network exchange interface of a computer network.

The signature is verified by means of the keychain comprising at least a public root signature key of the root signature key by the update software. The public root signature key may be stored in the second environment. The update software may determine the public root signature key necessary to verify the signature of the update code element by means of an ID of the public root signature key included in the signature.

Upon successful verification of the signature, the update software includes the update code element into the safety software code in the second environment. In other words, the update software adds the update code element to the safety software code. The inclusion may be performed by copying the update code element to a predefined region of a memory or by changing a target of a pointer in the second environment to the update code element.

The invention has the advantage that update code elements may be provided to the safety software code, wherein security of the update code element is ensured by the signature provided to the update package.

The invention also comprises embodiments that provide features which afford additional technical advantages.

According to a further embodiment of the invention the safety software code is executed by the computing hardware device inside the second environment to execute the safety function. In other words, after the update of the safety software code with the update code element, the computing hardware device runs the safety software code to provide the updated safety function of the computing hardware device.

According to a further embodiment of the invention the keychain comprises a certifier signature key, wherein the certifier signature key is digitally signed by means of the root signature key directly or via at least one intermediate signature key between the certifier signature key and the root key. In other words, the keychain comprises the certifier signature key, wherein the signature of the update package is generated by means of a private certifier signature key. The certifier signature key is digitally signed by means of the private root key. The verification of the signature of the update code element by means of the keychain comprises the steps of a verification of a signed public certifier signature key of the package by means of the public root signature key by the update software. In other words, the public certifier signature key is digitally signed by means of the private root signature key. The signed public certifier signature key is verified by the update software by means of the public root signature key to validate that the signed public certifier signature key is valid. The signature of the update code element is verified by the update software by means of the verified signed public certifier signature key. In other words, after verification of the signed public certifier signature key by means of the public root signature key, the signature of the update code element is verified by means of the verified signed public certifier signature key. The embodiment has the advantage that certifier signature keys for signing the update package may be provided to specific code provider. Therefore, several providers may contribute update code elements to the application code. The providers may sign the update code element by means of a private certifier signature key. The authorization of the respective providers may be verified by the update software by means of the signature of the respective public certifier signature keys, which is created by means of the private root signature key. In case the public certifier signature key is digitally signed by means of the private root signature key via at least one intermediate signature key, the verification of the signature comprises verifications of intermediate public certifier signature keys of the keychain. The keychain may comprise intermediate signature keys of one or more different levels of a hierarchy of the keychain. The verification of the signature may comprise a verification of a signed intermediate signature key of a lower level by means of an intermediate signature key of a higher level. In the operational view, a first level of intermediate private certifier signature keys may belong to actors that certify the software certifiers, while the second level of intermediate private certifier signature keys may belong to actors that certify the certifiers of the software certifiers, while the root private signature key belongs to the actor responsible for the safety of the machine.

According to a further embodiment of the invention at least one key of the keychain is retrieved from a hardware memory by the update software operated in the second environment. In other words, the public root signature key, the public intermediate signature key and/or the public certifier key is stored in the hardware memory, wherein the public root signature key, the public intermediate signature key and/or the public certifier key is retrieved by the update software to perform the verification of the signature. In this implementation preferable for increasing security, the public root signature key, the public intermediate signature key and/or the public certifier key is retrieved from the hardware memory by the update software operated in the second environment. The hardware memory is made accessible to the second environment by the host module. The hardware memory may be a hardware memory of the computing hardware device or a hardware memory of a device external to the computing hardware device. The hardware memory may be made accessible to the second environment by the host module by means of an interface provided by the host module connecting the second environment to the hardware memory. The embodiment has the advantage that the public root signature key, the public intermediate signature key and/or the public certifier key is stored external to the second environment.

According to a further embodiment of the invention, the retrieving of the at least one key of the keychain by the update software comprises the step of verification of the hardware memory by the update software by means of a physical unclonable function of the hardware memory. In other words, before the at least one key of the keychain is used by the update software to validate the signature of the update package, the hardware memory verifies the hardware memory by a check of the physical unclonable function of the hardware memory. An expected behavior of the physical unclonable function of the hardware memory may be stored in the second environment. Therefore, it is possible to determine whether the characterization of the physical unclonable function in the second environment fits to the physical unclonable function of the hardware memory. The embodiment has the advantage that a verification of the hardware memory may be provided. Therefore, it is possible to determine whether the hardware memory was replaced by another hardware memory to provide a wrong key for an introduction of malicious code elements to the safety software code.

According to a further embodiment of the invention, the retrieving of the at least one key of the keychain by the update software comprises the step of verification of a signature of the at least one key of the keychain by the update software by means of a repository key stored in the safe memory section of the second virtual machine. In other words, before the keychain is used by the update software to verify the signature of the update package, the at least one key of the keychain is validated by a repository key stored in the secure memory section. The embodiment has the advantage that a placement of the wrong public signature key in the secure memory section may be detected by the update software during the verification of the signature of the public signature key by the update software.

According to a further embodiment of the invention, the hardware memory is external to the computing hardware device. In other words, the at least one key of the keychain is fetched by the update software from the hardware memory, which is outside the computing hardware device. As an example, the hardware memory may be used as a central repository for providing the at least one key of the keychain to several computing hardware devices.

According to a further embodiment of the invention, the verification of the signature by means of the keychain by the update software comprises a step of providing the update code element and the signature of the update code element to a verification hardware device by the update software, a step of verification of the signature of the update code element by the verification hardware device and a transmission of a result of the verification to the update software by the verification hardware device. In other words the verification of the signature of the update code element by the update software is carried out as an external verification, wherein the verification of the signature of the update code element by means of the keychain itself is performed by the verification hardware device. As an example, the update software in the second environment may present the update code element and the signature specific for the update code element to the verification hardware device made accessible to the second environment by the host module for signature verification by said verification hardware device. The signature and the update code element are received by the verification hardware device. The verification hardware device verifies the signature and may transmit a signal to the update software indicating a successful verification. The verification hardware device may be designed as a Trusted Platform Module (TPM) of the computing hardware device.

According to a further embodiment of the invention, the update package comprises a code element identifier assigned to the update code element, wherein the step of verification of the signature by means of the keychain by the update software comprises a step of a verification by the update software whether the certifier signature key is authorized to provide the update code element of the code element identifier according to a signed authorization element, wherein the signed authorization element is digitally signed by the private root signature key directly or via the at least one intermediate signature key that is authorize by the root key to authorize the certifier signature key to provide the update code element of the code element identifier.

In other words, the verification by the update software whether the certifier signature key is authorized to provide the update code element of the specific code element identifier comprises a check whether the code element identifier associated with the update code element of the update package is assigned to the particular public certifier signature key in the signed authorization element. A successful verification of the signature requires that the code element identifier is assigned to the particular public certifier signature key. The code element identifier may describe a section of the safety software code. The signed authorization element may be a code element a tuple or a database entry assigning one or more code element identifiers to one or more public certifier signature keys. The signed authorization element may be stored in the second environment. The signed authorization element is digitally signed by the private root signature key or an authorized private intermediate signature key. The verification of the assignment of the code element identifier to the particular public certifier signature key allows a limitation of a right to change particular code elements to certain public certifier signature keys.

The signed authorization element may be contained in an authorization list stored in the safe memory resource, or the hardware memory. A successful verification of the signature requires that the code element identifier is assigned to the particular public certifier signature key in the authorization list. The authorization list determines the code element identifiers that are linked to a respective signed public certifier signature key. The code element identifier may describe a section of the safety software code. The use of the authorization list allows a limitation of the right to change particular code elements to certain public certifier signature keys. Instead of trusting the assignment because it was read from a trusted store, the hardware memory, as in the previous embodiment,

The update software verifies the signed authorization element by means of the public root signature key or the authorized intermediate signature key. In case of a successful verification of the signature of the signed authorization element the update software may prove whether the code element identifier of the update code element of the update package is assigned to the public certifier signature key. If the public certifier signature key is assigned to the code element identifier, the update software may update the safety software code with the update code element of the code element identifier.

The update software may verify the signature generated by means of the private root key for the tuple consisting of the particular public certifier signature key and the assigned code element identifiers. This ensures that the holder of the private root signature key intends for the holder of the particular private certifier signature key to provide updates for the particular code elements identified by the code element identifiers.

The signed authorization element may be digitally signed by means of the private intermediate signature key, wherein the verification of the signature comprises a step of the verification of the signature of the assignment element by means of the public intermediate signature key, and a step of a verification by the update software whether the assigned code element identifier associated with the update code element of the update package is assigned to the public intermediate certifier signature key in an signed intermediate authorization element authorizing the intermediate public certifier signature key to sign combinations of public certifier signature keys and lists of code element identifiers, wherein the signed intermediate authorization element is digitally signed by means of the private root signature key. The signed intermediate authorization element The intermediate assignment element comprises a tuple consisting of the public intermediate certifier signature key, a list of code element identifiers and a token authorizing the intermediate public certifier signature key to sign combinations of public certifier signature keys and lists of code element identifiers. According to a further embodiment, the signed authorization element is included in the certifier signature key and/or the signed intermediate authorization element is included in the intermediate signature key. In other words, the public certifier signature key comprises the signed authorization element and/or the intermediate signature key comprises the signed intermediate authorization element. The signed intermediate authorization element and/or the signed intermediate authorization element may be provided as code blocks attached to the respective public key.

The signed authorization element may be contained in the update package and signed by the private root signature key or the authorized intermediate signature key. In other words, the update package comprises the signed authorization element, comprising the assignment of the code element identifier to the particular public certifier signature key.

According to a further embodiment, the signed authorization element is included in the certifier signature key and/or the signed intermediate authorization element is included in the intermediate signature key. The signed authorization element and/or the signed intermediate authorization element may be attached to the keys as respective attachments.

According to a further embodiment, the verification of the signature comprises a step of a verification of an expiration date of the authorization of the certifier signature key to provide the update code element of the code element. In other words, an expiration date is added to the signed tuple of the signed authorization element. All signature verifications are augmented to also include a comparison of the expiration date to a real-time clock.

According to a further embodiment of the invention, the code element identifier of the update code element comprises a safety integrity level of the update code element, the verification of the fulfilment of the predefined update conditions comprise a step of a verification by the update software whether the public certifier signature key delivered with a particular update code element is authorized to provide the update code element of the safety integrity level by the private root signature key directly or via at least one intermediate signature key between the certifier signature key and the root key that is privileged by the root key to authorize the certifier signature key to provide the update code element of the safety integrity level. In other words, the verification by the update software whether the public certifier signature key used to sign the particular update code element is authorized to sign the particular code element up to at least the safety integrity level that is indicated for the particular update code element. In an extension of any of the above schemes for associating code element identifiers with public certifier signature keys, the code element identifiers are augmented to include the safety integrity level. The update software is augmented so that it verifies that the particular public certifier signature key used to sign the particular update code element is authorized to sign the particular code element up to at least the safety integrity level that is indicated for the particular update code element.

The code element identifier of the update code element comprises a safety integrity level of the update code element, the verification of the fulfilment of the predefined update conditions comprise a step of a verification by the update software whether the public certifier signature key delivered with a particular update code element is authorized to provide the update code element of the safety integrity level by the private root signature key directly or via at least one intermediate signature key between the certifier signature key and the root key that is privileged by the root key to authorize the certifier signature key to provide the update code element of the safety integrity level. In other words, the verification by the update software whether the public certifier signature key used to sign the particular update code element is authorized to sign the particular code element up to at least the safety integrity level that is indicated for the particular update code element. In an extension of any of the above schemes for associating code element identifiers with public certifier signature keys, the code element identifiers are augmented to include the safety integrity level. The update software is augmented so that it verifies that the particular public certifier signature key used to sign the particular update code element is authorized to sign the particular code element up to at least the safety integrity level that is indicated for the particular update code element.

According to a further embodiment of the invention, the code element identifiers comprise a safety integrity level. According to a further embodiment of the invention, the verification of the fulfilment of the predefined update conditions by the update package comprises a step of a verification of a safety integrity level of the update code element, against a required safety integrity level of a safety function operated by the safety software. In other words, one or more safety functions operated by the safety software require that the safety integrity level of the update code element complies with the required safety integrity level of the respective safety function. As an example, the required safety integrity levels of different safety functions may depend on the importance of the respective safety functions. It may be possible that the safety integrity level of the update code element complies with the required safety integrity level of a respective safety function of a lower importance, but does not comply with the required safety integrity level of a respective safety function of a higher importance. In that case the update software may deny the update to ensure the fulfilment of the required safety integrity level of the safety function of the higher importance. In a possible implementation, part of the certified information would be the safety integrity level of the update code element 16. The update software 18 would verify the suitability of the safety integrity level against the requirements of the safety functions operated by the safe software prior to installation. Compatible may define that the safety integrity level indicated for the particular update code element is equal or higher than the safety integrity level necessary for the update code element according to the update software and/or according to another code element of the safety software code. The latter association can be obtained by the update software from a second particular code element, the hardware memory or it can be stored in the configuration of the second environment that is provided to said second environment by the host module. The approach with the second particular code element has the advantage that the required safety integrity levels can be upgraded. For example, if the machine is upgraded to perform a more complex safety function, the required safety integrity levels of some code elements may increase.

According to a further embodiment of the invention, the code element identifier of the update code element comprises a maximum safety integrity level of the update code element, wherein the maximum safety integrity level describes a safety integrity level that is achieved by running multiple instances of the update code element.

The verification of the fulfilment of the predefined update conditions comprise a step of verifying whether the safety integrity level that is indicated for the particular update code element is compatible with the safety integrity level associated with the code element identifier by the update software. The step of verification of the safety integrity level of the update code element, comprises a step of a verification of the required safety integrity level of the safety function against the safety integrity level of the update code element. The step of verification of the safety integrity level of the update code element, comprises a step of a verification of the required safety integrity level of the safety function against the maximum safety integrity level of the set of running redundant update code elements. In a possible implementation, part of the certified information would be a maximum safety integrity level achievable by running redundant code elements. The update software would likewise verify the required safety integrity level of the safety function by calculating the achieved safety integrity level from the safety integrity level and maximum safety integrity level of the set of active code elements.

In other words, the code element identifiers are augmented to include a maximum safety integrity level. This is advantageous, for example, if the safety integrity level of a safety function shall be achieved by running multiple distinct code elements of a lower safety integrity level redundantly, to indicate a limit to such redundancy boosting. The update software may verify the maximum safety integrity level associated with the code element identifier in case the safety integrity level associated with the code element is not compatible with the necessary safety integrity level. In other words, the update software may prove whether the necessary safety integrity level may be achieved by running multiple sessions of the update code element.

According to a further embodiment of the invention, the inclusion of the update code element into the safety software code comprises the steps of a verification by the update software, whether the code element identifier associated with the update code element is contained in the list of code element identifiers of present code elements of the safety software code. In other words, the safety software code comprises several present code elements. Each of the present code elements is associated with a respective code element identifier saved in the list of code element identifiers. Each of the code elements may be attributed to a specific function of the safety software code. By the comparison of the code element identifier associated with the update code element, with the code element identifiers contained in the list, it is possible to determine, whether the safety software code already comprises a code element attributed to that specific function. If the code element identifier associated with the update code element is contained in the list, the existing code element is replaced with the update code element by the update software. If the code element identifier associated with the update code element is not contained in the list, the update code element is added to the safety software code and the identifier associated with the update code element is added to the list of code element identifiers associated with present code elements of the safety software code by the update software. In other words, the update code element replaces a present code element or is added as an additional code element to the safety software code depending on the presence of the code element identifier in the list.

According to a further embodiment of the invention, the verification of the fulfilment of the predefined update conditions by the update package comprises a step of verification of versioning information of the update code element. In other words, the upgrade software may compare a version of the update code element with a version of a respective code element of the safety software code. The update software may allow an update if the versioning information of the update code element is newer than the versioning information of the existing code element. Otherwise the update software may deny the update. The versioning information of the update code element may comprise a signed downgrade command. The update software may allow an update of the existing code element with the update code element of an older version- a so called downgrade - in case the signature of the downgrade command is valid.

According to a further embodiment of the invention, the method comprises the steps of saving the update package by the receiving software in a package memory section of the first virtual machine after receiving the update package by the receiving software. In other words, after the reception of the update package by the receiving software is completed, the respective update package is saved in the package memory section of the first virtual machine. The package memory section is solely provided and made accessible to the first virtual machine by the hypervisor. In other words, the hypervisor provides the package memory section to the first virtual machine, wherein the hypervisor doesn't provide the package memory section to the second virtual machine. The receiving software compares a package version information of the update package associated with the update code element with a device version information associated with the safety function and/or an existing code element saved in the shared memory. In other words, the update package comprises a package version information associated with the update code element. A device version information is associated with the safety function and/or the existing code element. The comparison of the package version information of the update package with the device version information allows a determination which one of the code elements is the newest one. The step of copying of the update package to the shared memory by the reception software is solely performed, if the package version information of the update package is higher than the device version information. In other words, if the update code element is newer than the safety function and/or an existing code element, the update package is copied to the shared memory in order to proceed with the method. If the version information are equal or if the package version information of the update package is older than the version information associated with the safety function and/or an existing code element a copying of the update package to the shared memory is denied. The embodiment has the advantage that a version management is provided by the reception software.

According to a further embodiment of the invention, the verification of the fulfilment of the predefined update conditions by the update package comprises a step of a verification of compatibility information provided by the update code element and/or code elements of the safety software code. In other words, the update code element and/or code elements of the safety software code comprise compatibility information, wherein the compatibility information define compatible and/or incompatible combinations of code elements and/or versions of respective code elements. Prior to the update, the update software verifies that the update code element is compatible with one or more code elements of the safety software code and/or the version of the update code element is compatible with one or more code elements of the safety software. The embodiment has the advantage that, a malfunction of the safety software caused by incompatibilities of code elements of the safety software code a prevented by the update software.

According to a further embodiment of the invention, the verification of the fulfilment of the predefined update conditions by the update package comprises a step of a verification of hardware requirements of the update code element against a hardware of the computing hardware device. In other words, the update code element comprises hardware requirements. Prior to the update, the update software verifies that the hardware requirements of the update code element comply with the hardware of the computing hardware device. In a possible implementation, part of the certified information would be hardware requirements such as CPU or memory requirements, that would be verified against the available hardware by the update software.

According to a further embodiment of the invention, the verification of the fulfilment of the predefined update conditions by the update package comprises a step of a verification of peripheral devices supported by the update code element against peripheral devices connected to the computing hardware device. In other words the update code element comprises supported peripheral devices. Prior to the update, the update software verifies whether the peripheral devices connected to the computing hardware device are supported by the update code element. In another possible implementation, part of the certified information would be a list of supported peripheral devices, which would be verified by the update software against connected peripheral devices.

According to a further embodiment of the invention, the verification of the fulfilment of the predefined update conditions by the update package comprises a step of a verification of a recorded number of execution times of the update code element in the second environment, against an allowed number of execution times of the update code element of the second environment. In other words, the update software reads the number of recorded executions of the update code element in the second environment and verifies whether the number of recorded executions of the update code element in the second environment exceeds the number of allowed execution times. If the number is exceeded, the update software denies the update. In a possible implementation, part of the certified information would be execution times of the update software element, which would be verified by the update software against available execution times in the second environment.

According to a further embodiment of the invention, the verification of the fulfilment of the predefined update conditions by the update package comprises a step of a verification of an expiration date of the update code element, against a current time. In other words, the update code element comprises the expiration date, wherein the expiration date describes a time after which an update of the safety software code by the update code element is not allowed. The update software is configured to verify whether the expiration date has passed. In case the expiration time has passed, the update software denies the update of the safety software code by the update code element. In a possible implementation, part of the certified information beyond the update code element presented to the update software in the second environment would be licensing information, for example including an expiration date of the license. In case the update code element replaces an existing code element without an expiration date, the update software would be configured so that after the expiration date, the pointer to the update code element would be restored to point to the original code element.

According to a further embodiment of the invention, the update package is copied from the shared memory section to the safe memory section of the computing hardware device by the update software prior to the step of verification of the signature. In other words, the verification of the signature is performed when the update package is saved in the safe memory section of the computing hardware device. The invention has the advantage that the update package is in a memory section that is not accessible by software running in the first virtual machine. Therefore, it is not possible to manipulate the update package from the first virtual machine during or after verification of the signature of the update package.

According to a further embodiment of the invention, the step of copying of the update package to the safe memory section and/or the step of verification of the signature by means of the public signature key is distributed over multiple cycles of the computing hardware device. In other words, the computing hardware device is configured to run multiple cycles of a safety function. The step of copying of the update package may for example perform during one or more cycles of the computing hardware device. The step of verification of the signature by means of the public signature key may be performed in following cycles of the computing hardware device. It is also possible, that the copying and the verification is performed in parallel.

According to a further embodiment of the invention, the update of the safety software code is performed by setting an active pointer to the update code element. In other words an active pointer can be set, pointing to the update code element. The active pointer can be a set by an introduction of a new pointer or by a replacement of an existing pointer.

A second aspect of the invention is related to a computing hardware device configured to operate a computer implemented method for updating a safety software code providing a safety function to the computing hardware device. The computing hardware device is configured to execute a host module, wherein the host module is configured to operate a first environment and a second environment in isolation from each other, wherein the host module is configured to provide a safe memory resource of the computing hardware device solely to the second environment. The computing hardware device is configured to operate the reception software in the first environment configured to receive an update package, wherein the update package comprises an update code element to update the safety software code and a signature of the update code element. The reception software is configured to copy the update package to a exchange resource of the computing hardware device, wherein the exchange resource is provided and accessible to the first environment and the second environment. The computing hardware device is configured to operate an update software in the second environment, configured to verify the signature of the update code element by means of a keychain. The update software is configured to include the update code element into the safety software code in the second environment upon successful verification of the signature.

A third aspect of the invention is related to a computer program comprising instructions which, when the program is executed by a computing hardware device, cause the computing hardware device to carry out the method according to the first aspect of the invention.

A fourth aspect of the invention is related to a computer-readable medium comprising instruction which, when executed by a computing hardware device, cause the computing hardware device to carry out the method according to the first aspect of the invention.

Further implementations of the computing hardware device according to the second aspect of the invention, computer program according to the third aspect of the invention and the computer-readable medium according to the fourth aspect of the invention, follow directly from the various embodiments of the method according to the first aspect of the invention and vice versa. In particular, individual features and corresponding explanations relating to the various implementations of the method according to the first aspect of the invention can be transferred analogously to corresponding implementations of the computing hardware device according to the second aspect of the invention, computer program according to the third aspect of the invention and the computer-readable medium according to the fourth aspect of the invention. In particular, the computing hardware device according to the second aspect of the invention is designed or programmed to carry out the method according to the first aspect of the invention or carries out the method according to the first aspect of the invention.

If it is mentioned in the present disclosure that the computing hardware device according to the second aspect of the invention, computer program according to the third aspect of the invention and the computer-readable medium according to the fourth aspect of the invention, are adapted, configured or designed to, et cetera, to perform or realize a certain function, to achieve a certain effect or to serve a certain purpose, this can be understood such that the component, beyond being usable or suitable for this function, effect or purpose in principle or theoretically, is concretely and actually capable of executing or realizing the function, achieving the effect or serving the purpose by a corresponding adaptation, programming, physical design and so on.

The computer program as well as the computer-readable storage medium may be denoted as respective computer program products comprising the instructions.

A computing hardware device may in particular be understood as a data processing device, which comprises processing circuitry. The computing unit can therefore in particular process data to perform computing operations. This may also include operations to perform indexed accesses to a data structure, for example a look-up table, LUT.

In particular, the computing hardware device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing hardware device includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

In the following, the invention will be explained in detail with reference to specific exemplary implementations and respective schematic drawings. Therein,
- FIG 1: shows a schematic illustration of a computing hardware device;
- FIG 2: shows a schematic illustration of an update package;
- FIG 3: shows a schematic illustration of a keychain used to verify an update package;
- FIG 4: shows a schematic illustration of a computer-implemented method for updating a safety software code providing a safety function to a computing hardware device.

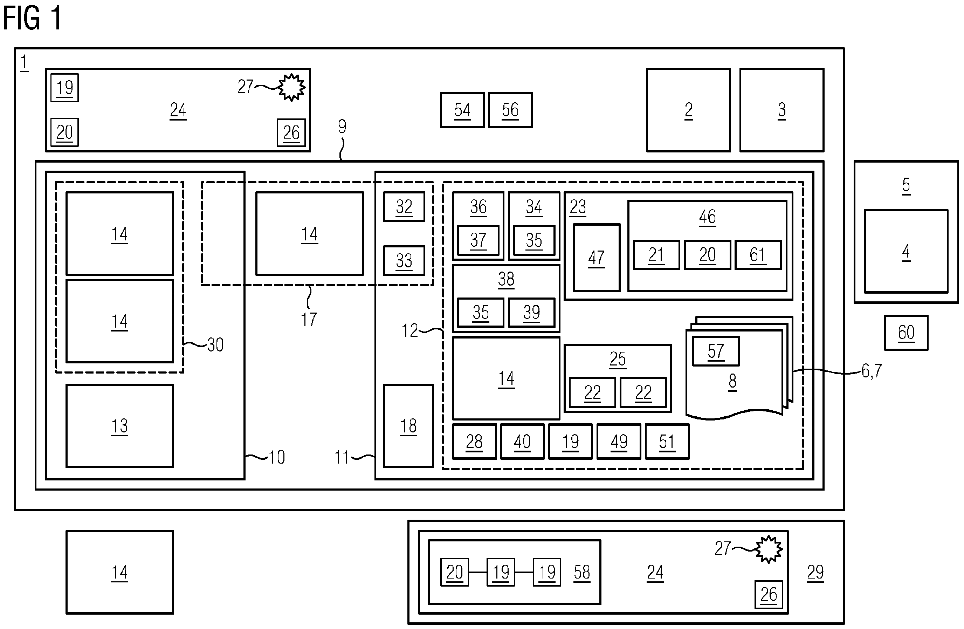

FIG 1 shows a schematic illustration of a computing hardware device.

The computing hardware device 1 may comprise a CPU 2 to perform operations according to software code. The computing hardware device 1 may comprise a memory 3 to store software code. The computing hardware device 1 may be configured to run computer programs 4 stored on a computer-readable medium 5. The computing hardware device 1 may be configured to operate robots or other computer-controlled devices. In order to provide safety functions 7 to ensure a safe operation of a robot, the computing hardware device 1 may be configured to run safety software code 6. The safety software code 6 may comprise present code elements 8, wherein each present code element 8 may be associated with a specific function of the safety function 7. In order to provide a safe operation, it may be necessary to update the safety software code 6 of the safety function 7. It may be necessary to ensure a secure operation of the computing hardware device 1. To ensure secure operation of the computing hardware device 1, the computing hardware device 1 may execute a host module 9, wherein the host module 9 may be configured to provide resources of the computing hardware device 1 to a first environment 10 and a second environment 11. The host module 9 may be configured to operate the first environment 10 and the second environment 11 in isolation from each other. In other words, the first environment 10 and the second environment 11 may be associated with respective resources of the computing hardware device 1 by the host module 9, wherein the environments 10, 11 do not have access to resources of the other environment.

The first environment 10 may comprise a safe memory resource 12 provided by the host module 9. An access to the safe memory resource 12 may be restricted to the first environment 10 by the host module 9. In order to update the safety software code 6 a reception software 13 may be operated by the computing hardware device 1 inside the first environment 10.

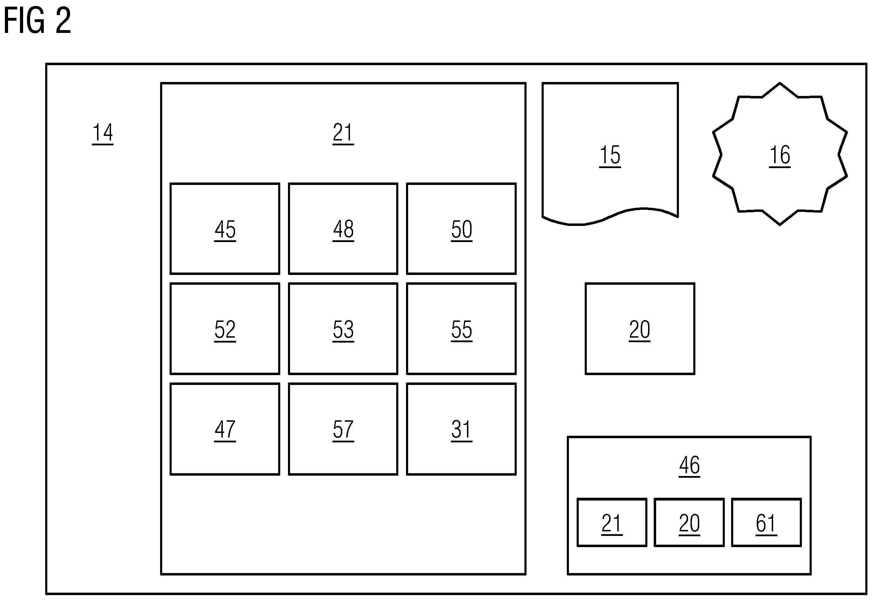

The reception software 13 may be configured to receive an update package 14 comprising an update code element 15, and a signature 16 of the update code element 15. A schematic illustration of the update package is shown in FIG 2. The update code element 15 may comprise code to run the safety function 7 or functions of the safety function 7. The update code element 15 may be included to the safety software code 6 as an additional code element or may replace a present code element 8 of the safety software code 6. The signature 16 of the update code element 15 may be configured to ensure an authenticity of the update code element 15. The reception software 13 may be configured to copy the update package 14 to a exchange resource 17. The exchange resource 17 may be designed as memory section or a network interface that may be accessible by the first environment 10 and the second environment 11. Therefore, it may be used by the environments 10, 11, to exchange data like the update code element 15.

The update itself may be performed by an update software 18 operated by the computing hardware device 1 inside the second environment 11. In order to verify the update code element 15, the update software 18 may verify the signature 16 of the update code element 15 by means of a keychain 58 comprising a public root signature key 19. The public root signature key 19 of the keychain 58 may be used to verify the signatures 16 directly or via intermediate signature keys 59 of the keychain 58. The public root signature key 19 may be used to verify the signature 16 of the update code element 15 in the keychain 58, wherein the signature 16 of the update code element 15 is digitally signed by a private certifier signature key 44. The signed public certifier 42 key may be comprised in the update package 14. The signed certifier key 20 itself may be signed by the public root signature key 19. The public root signature key 19 may be used by a certification authority 41. The update software 18 may be configured to end the update procedure, if the verification of the signature 16 of the update code element 15 fails.

The verification by the update software 18 may be performed on an external verification hardware 54 device. The update software 18 may provide the update code element 15 and the update code signature 16 of the update code element 15 to the verification hardware 54 device. The verification of the update code signature 16 of the update code element 15 may be performed by the verification hardware 54 device. After verification, the verification hardware 54 device may transmit a result of the verification to the update software 18.

The update software 18 may continue with the update procedure, if the verification of the signature is successful. The update code element 15 in the update package 14 may be attributed to a specific section of the safety software code 6. In order to identify the respective section of the safety software code 6, the update package 14 may comprise a code element identifier, which may be associated with the update code element 15.

It may be possible, that an addition of code elements to specific sections of the safety software code 6 may be restricted to certain providers. For that reason, the update software 18 may be configured to verify whether the certifier 42 signature key is authorized to provide the update code element 15 of the code element identifier according to a signed authorization element 45. The signed authorization element 45 may be included in an authorization list 23 stored in the safe memory resource 12 of the second environment 11. The authorization list 23 may comprise code element identifiers, wherein the code element identifiers are associated with respective certifier 42 keys. Therefore, in order to update the safety software code 6, it is necessary that the signed public certifier 42 key used to verify the signature of the update code is associated with the respective code element identifier. The signed authorization element 45 may be digitally signed by the private root signature key directly or via the at least one intermediate signature key 59 that may be authorized by the root key to authorize the certifier 42 signature key to provide the update code element 15 of the code element identifier according to a signed intermediate authorization element 46 wherein the signed authorization element 45 is digitally signed by the private root signature key.

The signed authorization element 45 may be saved in the authorization list 23, stored in the safe memory resource 12 or the hardware memory 24.

The signed authorization element 45 may be included in the certifier 42 signature key. The signed intermediate authorization element 46 may be included in the intermediate signature key 59. In other words, authorization elements for verification of the authorization may be part of the respective keys of the keychain 58.

The signed authorization element 45 and/or the signed intermediate authorization element 46 may comprise an expiration date of the authorization 47. The update software 18 may be configured to compare expiration date of the authorization with a current time 64. If the expiration date has passed, the certifier 42 signature key may not be allowed to provide the update package 14 of the identifier.

The update software 18 may be configured to continue with the update procedure in case the signed public certifier 42 key is allowed to provide update code elements 15 of the respective identifier. Otherwise, the update procedure may be terminated by the update software 18.

The code element identifier of the update code element 15 may comprises a safety integrity level 48 of the update code element 15 The update software 18 may verify whether the certifier 42 signature key is authorized to provide the update code element 15 of the safety integrity level by the private root signature key directly or via at least one intermediate signature key 59 between the certifier 42 signature key and the root key that is privileged by the root key to authorize the certifier 42 signature key to provide the update code element 15 of the safety integrity level. The safety integrity level may depend on an importance of a safety function 7, related to the respective update code element 15. The authorized safety levels 50 of signed public certifier 42 key may be stored in the authorization element as well.

The safety integrity level 48 of the update code element 15, may be verified against a required safety integrity 52 level of a safety function 7 operated by the safety software. In other words, the safety function 7, provided by the safety function 7 code may determine a required safety integrity 52 level of code elements, used by the respective safety function 7.

The safety integrity level 48 of the update code element 15 may comprise a maximum safety integrity level 49. The maximum safety integrity level 49 may describe a safety integrity level that may be achievable by running a set of redundant update code elements 15. The update software 18 may compare the safety integrity level 48 of the update code element 15 against the required safety integrity 52 level in a first step. If the safety integrity level is not compatible with the required safety integrity 52 level, the update software 18 may verify whether the required safety integrity 52 level may be met by running multiple sessions of the update code element 15 to increase the maximum safety integrity level 49. The maximum safety integrity level 49 gives the highest possible safety integrity level, achievable by running multiple session of the update code element 15.

The at least one key of the keychain 58 may be stored in a hardware memory 24 that may be provided by the computing hardware device 1 or an external device 29. The public root signature key 19 or the signed certifier key 20 may be fetched by the first environment 10 through an interface provided by the host module 9. In order to ensure security, the update software 18 may be configured to verify the hardware memory 24 by means of a repository key 28, wherein the repository key 28 is stored in the safe memory resource 12 of the second environment 11. The repository key 28 may be used by the update software 18 to verify a signature 27 of the public root signature key 19. Therefore, it is possible to prove that the public root signature key 19 is the right key. It may be possible that the update software 18 is configured to verify an identity of the hardware memory 24 by means of the physical unclonable function 26. A characterization 40 of the physical unclonable function 26 may be stored in the safe memory resource 12 of the second environment 11. By comparing the physical unclonable function 26 of the hardware memory 24 with the characterization 40 of the physical unclonable function 26 stored in the hardware memory 24, it may be possible to identify a specific hardware memory 24. Therefore, an exchange of the hardware memory 24 may be detected by the update software 18.

As an alternative it may be possible that the reception software 13 is configured to store the update package 14 in the package memory resource 30 of the first environment 10 after reception of the update package 14. The package memory resource 30 of the first environment 10 may be used as a package repository by the reception software 13. The update package 14 may comprise a package version information 31 of the update package 14. The package version information 31 of the update package 14 may be attributed to the update code element 15 of the update package 14. The update software 18 may be configured to compare the package version information with a device version information 32 attributed to a version of the safety software code 6 or a version of a code element of the safety software code 6. The device version information 32 may be stored in the exchange resource 17 by the update software 18. Therefore, the reception software 13 may be configured to determine if the version of the update code element 15 is suitable for an update of the software code. Determination of an update procedure may be indicated by the update software 18 by an increment of a counter 33 stored in the exchange resource 17. The update code element 15 or the package version information 31 may have to comply with other code elements 8. Therefore the update packages 14 or code elements may provide compatibility information 57. The update software 18 may verify whether the update code element 15 is compatible with installed code elements 8. The update software 18 may deny the update in case of an incompatibility with one of the code elements.

The update code element 15 may comprise hardware 54 requirements 53 describing requirements related to the hardware 54 of computing hardware device 1, as well as supported peripheral devices 56 55. The update software 18 may compare the hardware 54 requirements 53 of the update code element 15 against the available hardware 54 of the computing hardware device 1. The update software 18 may compare the supported peripheral devices 56 55, supported by the update code element 15 against the connected peripheral devices 56 of the computing hardware device 1. In case, the hardware 54 of the computing hardware device 1 does not fit with the required hardware 54, the update software 18 may deny the update. In case the connected peripheral devices 56 are not supported by the update code element 15, the update software 18 may also deny the update of the safety software code 6.

As an alternative to a copying of the update code element 15 during the update, it may be possible that the update of the safety software code 6 is performed by the update software 18 by means of a setting of pointers. A list 34 of active pointers 35 comprising active pointers 35, which may be attributed to specific memory section regions 39 of the exchange resource 17 or the safe memory resource 12 may be stored in the list 34 of active pointers 35. The active pointers 35 may indicate that code elements 8 stored in the active memory 3 regions are used for this safety software code 6. A list 36of inactive pointers 37 may also be stored in the safe memory resource 12. The inactive pointers 37 may refer to inactive memory 3 regions of the exchange resource 17 or the safe memory resource 12. A reference list 38 may be stored in the safe memory resource 12 that may associate pointers to specific memory 3 resource regions.

FIG 2 shows a schematic illustration of an update package.

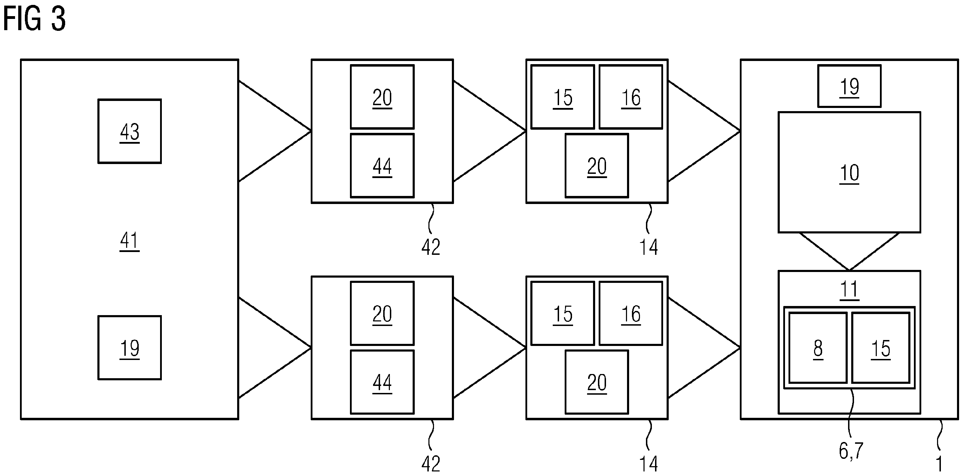

FIG 3 shows a schematic illustration of a keychain 58 used to verify an update package 14.

A certification authority 41 may have a key pair comprising the public root signature key 19 and a private root signature key 43. The private root signature key 43 may be used to sign other keys or to sign update code elements 15. The public root signature key 19 may be used to verify the signatures 16 created by means of the private root signature key 43. The certification authority 41 may be a manufacturer of the computing hardware devices 1. The manufacturer may be responsible to provide a safe and secure operation of the computing hardware device 1. Therefore, the certification authority 41 may use the private root signature key 43 to sign checked update code elements 15. There may be certifiers 42 that may be allowed to provide at least certain code elements to the application software code. In order to verify the update code elements 15 provided by the certifiers 42, the certifiers 42 may sign the update packages 14 by means of private certifier signature keys 44. In order to verify the signature 16 of the update code elements 15 a signed certifier key 20 may be used. The signed certifier key 20 may be digitally signed by the private root signature key in order to authorize the certifier 42 to provide packages to the safety function 7 code. The update code element 15 may be digitally signed by the certifier 42 by adding a signature to the update package 14. The update package 14 may also comprise the signed certifier key 20 necessary to verify the signature. In order to verify the update code element 15, the computing hardware device 1 may validate the code element by means of a verification of the signature 16 of the update code element 15 created with the private certifier signature key 44. When the private certifier signature key 44 is used to sign the update code element 15, the computing hardware device 1 may use the public root signature key 19 to verify the signed certifier key 20. When the verification is successful, the update code element 15 may be added to a safety software code 6 in the second environment 11.

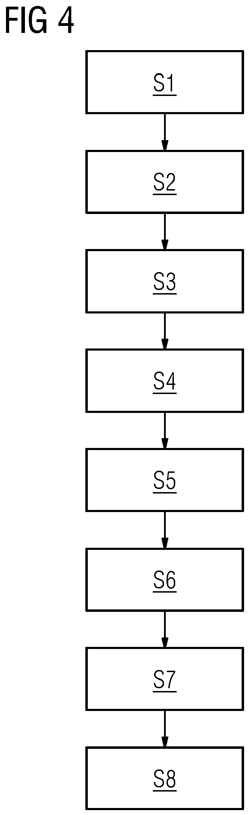

FIG 4 shows a schematic illustration of a computer-implemented method for updating a safety software code 6 providing a safety function 7 to a computing hardware device 1.

In a first step the computing hardware device 1 may execute a host module 9.

In a second step the host module 9 may operate a first environment 10 and a second environment 11 in isolation from each other, wherein a safe memory resource 12 of the computing hardware device 1 is solely provided and made accessible to the second environment 11 by the host module 9.

In a third step a reception software 13 operated in the first environment 10 may receive an update package 14, wherein the update package 14 comprises an update code element 15 to update the safety software code 6 and a signature 16 of the update code element 15.

In a fourth step the reception software 13 may copy the update package 14 to a exchange resource 17 of the computing hardware device 1, wherein the exchange resource 17 is provided and made accessible to the first environment 10 and the second environment 11 by the host module 9.

In a fifth step an update software 18 operated in the second environment 11 may retrieve a public root signature key 19 from a hardware memory 24, wherein the hardware memory 24 is made accessible to the second environment 11 by the host module 9.

In a sixth step the update software 18 may verify the signature by means of the public root signature key 19.

In a seventh step the update software 18 may include the update code element 15 into the safety software code 6 in the second environment 11 if the verification of the signature is successful.

In an eighth step the computing hardware device 1 may execute the safety software code 6 inside the second environment 11 to enable the safety function 7.

Safety and security in computer-controlled machines are conflicting due to a basic juxtaposition:
Safe code is proven safe in involved processes leading up to certification before being exposed in actual application. It is updated only after deliberate testing and certification of the update to prevent the introduction of errors.

Secure code is proven secure by withstanding vigorous, learned attacks. Secure systems are updated continuously to prevent successful hostile forces from exploiting recently-discovered vulnerabilities.

From this juxtaposition, a tendency of safe code to be insecure and secure code to be unsafe can be deduced. This conflict is usually resolved by constricting safe code in machines to independent computing hardware 54 that is isolated from other parts of the machine, thus making it impossible to attack, but also making it very hard to update. This is one factor limiting the complexity of safety functions 7 that can be practically implemented, since a set of safety functions 7 must be both complete and proven when the product ships. This means that any update of the machine's functionality that also requires an improvement of an existing safety function 7 or the addition of a new safety function 7 requires significant effort in overcoming the isolation of the independent computing hardware 54 running the safety functions 7 while maintaining the security of the machine.

This invention therefore deals with the question of how to reduce the effort of updating safe software in a machine.

An aim of the invention is to provide a method for securely updating safe software in a multitude of machines automatically and remotely.

Currently, efforts are underway to end the isolation of safety software code 6 onto independent computing hardware devices 1. The approach usually taken in these efforts is to run a safe and secure host module 9 on general-purpose hardware 54. The host module 9 guarantees that certain safe environments 10, 11 will always have access to the hardware 54 resources required for safety functions 7 in real time. The safe environments 10, 11 then run the actual code of the safety functions 7. The host module 9 also guarantees the isolation of the safe environments 10, 11 from attacks originating from any other environments 10, 11 that may be compromised. However, in these approaches the safe environments 10, 11 suffer from the same defect regarding updatability as the most common approach using isolated computing hardware 54.

The solution introduced here is based on several observations:
Safe host modules 9 can offer code updates to safe environments 10, 11 by writing to shared memory 3 segments that the environment can read. The safe function of the environment is not affected by the mere offer and the safe environment can elect to examine and consume the update in a safe fashion and in isolation.

The host module 9 can allow the second environment 11 access to fixed cryptographic materials comprising the public signature key 19 stored in the hardware memory 24 of the computing hardware device 1, where preferably the second environment 11 reads from the hardware 54 store directly.

Therefore, it is in principle possible that the second environment 11 verifies features of the update code element 15, for example the update's safety integrity level, by cryptographic means. For example, the second environment 11 may interpret the fixed cryptographic materials as public signature keys 19 of a certification authority 41 and use these public signature keys 19 to verify the signature 16 of the update code element 15.

There are cryptographic means such as PKI which can be subjected to a security analysis, for example by calculating the average time it would take a well-equipped attacker to find the signature that would cause a safe environment to accept a malicious update, and adding a safety margin to arrive at probability for dangerous failure per hour that is caused by the attack.

Armed with these observations, a simple solution is provided.

In the fixed hardware 54 store of each computing hardware device 1, a public signature key of a certifier 42 may be provided, typically as part of a certificate. The certifier 42 - possibly upon verifying testing documentation provided by the machine's developer - may sign the update code element 15 using the corresponding private signature key. The certifier 42 may be an automated test suite.

The machine's developer may send the update package 14 comprising the update code element 15 and the signature 16 of the update code element 15 to the computing hardware device 1 of a machine, where it is received by the reception software 13 running in the first environment 10.

The reception software 13 in the first environment 10 may copy the update package 14 into the exchange resource 17 provided by the host module 9 and may signal a completion of the copying process by incrementing a counter 33 in the exchange resource 17, wherein the host module 9 guarantees that the increment is written to the safe memory resource 12 in-order with the copying of the update.

The update software 18 in the second environment 11 may check the counter 33 for the increment after each cycle of the safe software. If an increment occurs, the update software 18 in the second environment 11 may copy the update package 14 to the safe memory resource 12 of the second environment 11 that may be indicated by an inactive code pointer in the safe memory resource 12 before the next cycle of the safe software must start.

After the copy operation, the update software 18 in the second environment 11 may read the public signature key of the certifier 42 from the fixed hardware 54 store of the computing hardware device 1. The update software 18 in the second environment 11 may proceed to verify the signature 16 of the update code element 15 in the update package 14 copied to safe memory resource 12 of the second environment 11.

The verification process may be previously tested to complete before the next cycle of the safety function 7 is required to start. If the signature 16 of the update code element 15 is verified successfully, the update software 18 in the second environment 11 may set the inactive code pointer to the memory 3 region holding the code that ran in the last cycle and jump to the code just verified, completing the update.

In a possible implementation, the safe host module 9 may provide safe non-volatile storage to the second environment 11 so that the update software 18 in the second environment 11 may store the full verified and updated software 18.

In another possible implementation, the second environment 11 would check version information of update code elements 15 provided as part of the signed certified data in the exchange resource 17. The first environment 10 may maintain a non-safe, non-volatile store package memory 3 section for signed update packages 14. The first environment 10 may present the second environment 11 with proposed update packages 14 whenever the device version information 32 indicated by the second environment 11 is out-of-date, as would happen in some implementations for example after a reboot. The second environment 11 would decide on accepting the package for update based on the versioning information. In a preferred implementation, the decision would be based on compatibility information 57 as provided by the package and by other packages, which would be equivalently certified.

In another possible implementation, part of the certified information beyond the update code element 15 presented to the update software 18 in the second environment 11 would be licensing information, for example including an expiration date of the update code element 15. In case the update code element 15 replaces an existing code element without an expiration date, the update software 18 would be configured so that after the expiration date, the pointer to the update code element 15 would be restored to point to the original code element. The update code element 15 may also comprise a number of available execution times 62. The update software 18 may compare the number of available execution times 62 with a recorded number of executions 61 of the update code element 15 by the computing hardware device 1 to ensure that the number of available execution times 62 is not exceeded.

In another possible implementation, part of the certified information would be the safety integrity level 48 of the update code element 15. The update software 18 would verify the suitability of the safety integrity level against the requirements of the safety functions 7 operated by the safe software prior to installation.

In another possible implementation, part of the certified information would be a maximum safety integrity level 49 achievable by running redundant code elements. The update software 18 would likewise verify the required safety integrity 52 level of the safety function 7 by calculating the achieved safety integrity level from the safety integrity level and maximum safety integrity level 49 of the set of active code elements.

In another possible implementation, part of the certified information would be hardware requirements 53 such as CPU 2 or memory 3 requirements, that would be verified against the available hardware 54 by the update software 18.

In another possible implementation, part of the certified information would be a list of supported peripheral devices 55, which would be verified by the update software 18 against connected peripheral devices 56.

In another possible implementation, part of the certified information would be recorded execution times 61 of the update software 18 element, which would be verified by the update software 18 against available execution times 62 in the second environment 11.

In a possible implementation, the update software 18 in the second environment 11 may split processes over multiple cycles of the safety function 7. In a possible implementation, the update software 18 in the second environment 11 may perform the copy operation after one cycle and the verification operation in the next cycle. In another possible implementation, the update software 18 in the second environment 11 may perform the copy operation in N chunks distributed over N cycles of the safety function 7. In another possible implementation, the second environment 11 may perform the verification operation in N chunks distributed over N cycles. In another possible implementation, each of the N chunks may be first copied, then verified.

In a possible implementation, the public root signature key 19 stored in the hardware memory 24 of the computing unit will contain a root public signature key instead of the certifier 42 public signature key. The certifier 42 will include a certificate with the signed code that authorizes the certifier 42 to perform certifications of update code elements 15.

In a further possible implementation, the signed certifier key 20 may be signed by means of an intermediate certifier 42 key wherein the intermediate certifier 42 key may be signed by means of the public root signature key 19. Therefore a keychain 58 or key hierarchy may be provided as known from SSL certificates. As an example, a notified body may certify a machine developer to self-certify updates. Also, a component OEM may certify a system integrator to perform certifications.

In a possible implementation, the update software 18 in the second environment 11 may signal the completion of the update to the first environment 10 by storing a value of the in-order counter 33 in the exchange resource 17 into the safe memory resource 12 of the second environment 11, verifying the counter 33 value after successful completion of the update, and setting the in-order counter 33 in the exchange resource 17 to the value stored in safe memory resource 12 of the second environment 11 incremented by one. The reception software 13 running in the first environment 10 may reconfigure itself based on this counter 33 increment to use an updated non-safe software received in parallel.

In a possible modification, the update code element 15 may only refer to a certain a part of the safety software code 6 in the second environment 11. In a possible implementation, the update software 18 in the second environment 11 may keep a list of pointers to active memory 3 regions in the safe memory resource 12 and a list of pointers to inactive memory 3 regions in the safe memory resource 12. The update software 18 in the second environment 11 may also keep the list of code element identifiers 25 between pointers and unique code element identifiers associated with present code elements 22 8 of the safety software code 6. The update package 14 may be copied to the first pointer to an inactive region in the exchange resource 17.

A step after the successful verification of the signature 16 of the update code element 15, may depend on a presence of the code element identifier 21 associated with the update code element 15 in the list of code element identifiers 25.

If the code element identifier 21 associated with the update code element 15 is contained in the list of code element identifiers 25 between pointers and code element identifiers, the corresponding active memory 3 pointers and passive memory 3 pointers may be swapped by the update software 18. Otherwise, the inactive memory 3 pointer may be added to the list of active memory 3 pointers.

In a possible extension, certification of update code elements 15 by a specific certifier 42 may be restricted to code element identifiers of specific code elements of the safety software code 6. The signed certifier key 20 of the certifier 42 would include the code element identifiers that the certifier 42 is authorized for. As an alternative, an authorization list 23 would be kept in the second environment 11. In a possible extension, the authorization list 23 would be kept in the hardware memory 24. The authorization list 23 itself may be updated through any of the procedures outlined above.

As an advantage compared to current solutions, the safety function 7 in an already-deployed computing hardware device 1 may be improved over-the-air, automatically. Currently, this would typically require a properly authorized and authenticated human interacting with the computing hardware device 1 using an SD card or a commissioning PC. An update of a safety function 7 could, for an autonomous robot, increase the maximum safe speed due to an improvement in the safe algorithm performing collision prevention. This maximum safe speed could be exploited by software in the first environment 10 to perform tasks faster; also, tasks that only become possible at certain safe speeds, such as catching falling loads, could become possible for an autonomous robot featuring a sufficiently strong catching mechanism, possibly based on a robot arm.

A previously non-existent safety function 7 could be implemented on the already-deployed computing hardware device 1 over the air, automatically. Currently, this would typically require a properly authorized and authenticated human interacting with the deployed Computing hardware device 1 using an SD card or a commissioning PC. For example, a robot that is only capable of operating in environments 10, 11 where all possible collision partners are stationary could obtain a safety function 7 performing collision prevention based on trajectory forecasts through such an update. The robot would thereafter be able to operate also in environments 10, 11 with moving potential collision partners.

## Claims

1. Computer-implemented method for updating a safety software code (6) providing a safety function (7) to a computing hardware device (1), comprising the steps of:
- executing a host module (9) by the computing hardware device (1), wherein a first environment (10) and a second environment (11) are operated in isolation from each other by the host module (9), and wherein a safe memory resource (12) of the computing hardware device (1) is solely provided and made accessible to the second environment (11) by the host module (9);
- reception of an update package (14) by a reception software (13) operated in the first environment (10), wherein the update package (14) comprises an update code element (15) to update the safety software code (6) and an update code signature (16) of the update code element (15), signed by means of a keychain (58) comprising at least a root signature key (19);
- providing of the update package (14) to an exchange resource (17) of the computing hardware device (1) by the reception software (13), wherein the exchange resource (17) is provided and made accessible to the first environment (10) and the second environment (11) by the host module (9);
- verification of a fulfilment of predefined update conditions by the update package (14) by an update software (18) operated in the second environment (11), wherein the verification of the fulfilment of the predefined update conditions comprises a step of:
- verification of the update code signature (16) of the update code element (15) by means of the keychain (58);
- upon successful verification of the fulfilment of the predefined update conditions by the update package (14): inclusion of the update code element (15) into the safety software code (6) in the second environment (11) by the update software (18).

2. Computer-implemented method according to claim 1, comprising the step of
- executing the safety software code (6) by the computing hardware device (1) inside the second environment (11) to enable the safety function (7) provided by the update code element (15).

3. Computer-implemented method according to claim 1 or 2, wherein
the keychain (58) comprises a signed public certifier signature key (20), wherein the signed public certifier signature key (20) is digitally signed by means of the private root signature key (42) directly or via at least one intermediate signature key (59) of the keychain (58), arranged between the signed public certifier signature key (20) and the public root signature key (19)in the keychain (58) .

4. Computer-implemented method according to one of the preceding claims, comprising the step of
- retrieving at least one key of the keychain (58) from a hardware memory (24) by the update software (18), wherein the hardware memory (24) is made accessible to the second environment (11) by the host module (9);

5. Computer-implemented method according to claim 4, wherein the retrieving of the at least one key of the keychain (58) by the update software (18), comprises the step of
- verification of the hardware memory (24) by the update software (18) by means of a physical unclonable function (26) of the hardware memory (24) against a characterization (40) of the physical unclonable function (26), stored in the safe memory resource (12).

6. Computer-implemented method according to claim 4 or 5 wherein the retrieving of the at least one key of the keychain (58) by the update software (18), comprises the step of
- verification of a signature (27) of the at least one key of the keychain (58) by the update software (18) by means of a repository key (28), stored in the safe memory resource (12).

7. Computer-implemented method according to claim 5 or 6, wherein the hardware memory (24) is external to the computing hardware device (1).

8. Computer-implemented method according to any of the preceding claims, wherein the step of verification of the update code signature by means of the keychain (58) comprises steps of:
- providing the update code element (15) and the update code signature (16) of the update code element (15) to a verification hardware device (60) by the update software (18),
- verification of the update code signature (16) of the update code element (15) by the verification hardware device (60),
- transmission of a result of the verification to the update software (18) by the verification hardware device (60).

9. Computer-implemented method according to any of the preceding claims, wherein
the update package (14) comprises a code element identifier (21) assigned to the update code element (15),
and wherein the verification of the fulfilment of the predefined update conditions comprise a step of:
- verifying whether the signed public certifier signature key (20) is authorized to provide the update code element (15) of the code element identifier (21) according to a signed authorization element (45), wherein the signed authorization element (45) is digitally signed by means of the private root signature key (43) directly or via the at least one intermediate signature key (59) that is authorized by the private root signature key (43) to authorize the signed public certifier signature key (20) to provide the update code element (15) of the code element identifier (21) according to a signed intermediate authorization element (46) wherein the signed authorization element (45) is digitally signed by means of the private root signature key (43), wherein the successful verification of the authorization requires that the code element identifier (21) is assigned to the signed public certifier signature key (20)according to a signed authorization element (45).

10. Computer-implemented method according to claim 9, wherein the signed authorization element (45) is saved in an authorization list (23), stored in the safe memory resource (12) or the hardware memory (24).

11. Computer-implemented method according to claim 9, wherein, the signed authorization element (45) is included in the signed public certifier signature key (20) and/or the signed intermediate authorization element (46) is included in the intermediate signature key (59).

12. Computer-implemented method according to one of the claims 9 to 11, wherein, the verification of the fulfilment of predefined update conditions by the update package (14) comprises the step of:
- verification of an expiration date of the authorization (47) of the signed public certifier signature key (20) to provide the update code element (15) of the code element.

13. Computer-implemented method according to any of the preceding claims, wherein the code element identifier (21) of the update code element (15) comprises a safety integrity level (48) of the update code element (15),
wherein the verification of the fulfilment of the predefined update conditions comprise a step of:
- Verifying whether the signed public certifier signature key (20) is authorized to provide the update code element (15) of the safety integrity level (48) by the private root signature key (43) directly or via at least one intermediate signature key (59) between the signed public certifier signature key (20) and the private root signature key (43) that is privileged by the private root signature key (43) to authorize the signed public certifier signature key (20) to provide the update code element (15) of the respective safety integrity level (48).

14. Computer-implemented method according to claim 13, wherein, the verification of the fulfilment of predefined update conditions by the update package (14) comprises a step of:
Verification of a safety integrity level (48) of the update code element (15), against a required safety integrity (52) level of a safety function (7) operated by the safety software.

15. Computer-implemented method according to claim 13 or 14, wherein,
the safety integrity level (48) of the update code element (15) comprises a maximum safety integrity level (49) of the update code element (15) achievable by running a set of redundant update code elements (15),
wherein the step of verification of the safety integrity level (48) of the update code element (15), comprises steps of
verification of the required safety integrity level (52) of the safety function (7) against the safety integrity level (48) of the update code element (15), and/or
verification of the required safety integrity (52) level of the safety function (7) against the maximum safety integrity level (49) of the set of running redundant update code elements (15).
level associated with the code element identifier (21) by the update software.

16. Computer-implemented method according to any of the preceding claims, wherein the inclusion of the update code element (15) into the safety software code (6) comprises the steps of:
- verification by the update software (18) whether the code element identifier (21) associated with the update code element (15) is contained in a list (25)of code element identifiers (21) of present code elements (8) of the safety software code (6),
- if the code element identifier (21) associated with the update code element (15) is contained in the list (25)of code element identifiers (21): replacement of the present code element (8) with the update code element (15) by the update software (18);
- if the code element identifier (21) associated with the update code element (15) is not contained in the list (25) of code element identifiers (21): addition of the update code element (15) to the safety software code (6) and addition of the identifier associated with the update code element (15) to the list of code element identifiers (21) (25) associated with present code elements (8) of the safety software code (6) by the update software (18).

17. Computer-implemented method according to any of the preceding claims, wherein, the verification of the fulfilment of predefined update conditions by the update package (14) comprises a step of:
- comparison of a package version information (31) of the update package (14) associated with the update code element (15) with a device version information (32) associated with the safety function (7) and/or an existing code element (8), by the update software (18); wherein
the step of updating the safety software code (6) is solely performed if the package version information (31) of the update package (14) is compatible with the device version information (32).

18. Computer-implemented method according to any of the preceding claims, wherein, the verification of the fulfilment of predefined update conditions by the update package (14) comprises a step of:
Verification of compatibility information (57) as provided by the package and/or by other packages.

19. Computer-implemented method according to any of the preceding claims, wherein, the verification of the fulfilment of predefined update conditions by the update package (14) comprises a step of:
- Verification of hardware requirements (53) of the update code element (15) against an available hardware (54) by the update software (18).

20. Computer-implemented method according to any of the preceding claims, wherein, the verification of the fulfilment of predefined update conditions by the update package (14) comprises a step of:
- verification of supported peripheral devices (55), against connected peripheral devices (56).

21. Computer-implemented method according to any of the preceding claims, wherein, the verification of the fulfilment of predefined update conditions by the update package (14) comprises a step of:
Verification of execution times of the update software (18) element, against available execution times (62) in the second environment (11).

22. Computer-implemented method according to any of the preceding claims, wherein, the verification of the fulfilment of predefined update conditions by the update package (14) comprises a step of:
Verification of an expiration date (63) of the update code element (15), against a current time (64).

23. Computer-implemented method according to any of the preceding claims, wherein, the verification of the fulfilment of predefined update conditions by the update package (14) comprises a step of:
Verification of a safety integrity level (48) of the update code element (15), against a required safety integrity (52) level of a safety function (7) operated by the safety software.

24. Computer-implemented method according to one of the preceding claims, comprising the step of copying of the update package (14) from the exchange resource (17) to the safe memory resource (12) of the computing hardware device (1) by the update software (18), prior to the step of verification of the signature (16) of the update code element (15) .

25. Computer-implemented method according to claim 24, wherein the step of copying of the update package (14) to the safe memory resource (12) and/or the step of verification of the signature (16) of the update code element (15) by means of the keychain (58) is distributed over multiple cycles of the computing hardware device (1).

26. Computer-implemented method according to one of the preceding claims, wherein the update of the safety software code (6) is performed by setting an active pointer (35) to the update code element (15).

27. Computing hardware device (1), configured to operate a computer-implemented method for updating a safety software code (6) providing a safety function (7) to the computing hardware device (1), **characterized in that**
- the computing hardware device (1) is configured to:
- execute a host module (9), wherein a first environment (10) and a second environment (11) are operated in isolation from each other by the host module (9), and wherein a safe memory resource (12) of the computing hardware device (1) is solely provided and made accessible to the second environment (11) by the host module (9);
- receive an update package (14) by a reception software (13) operated in the first environment (10), wherein the update package (14) comprises an update code element (15) to update the safety software code (6) and an update code signature (16) of the update code element (15), signed by means of a keychain (58) comprising at least a root signature key (19);
- provide the update package (14) to an exchange resource (17) of the computing hardware device (1), wherein the exchange resource (17) is provided and made accessible to the first environment (10) and the second environment (11) by the host module (9);
- verify a fulfilment of predefined update conditions by the update package (14) by an update software (18) operated in the second environment (11), wherein the verification of the fulfilment of the predefined update conditions comprises a step of a verification of the update code signature (16) of the update code element (15) by means of the keychain (58);
- include the update code element (15) into the safety software code (6) in the second environment (11) upon successful verification of the fulfilment of the predefined update conditions by the update package (14).

28. Computer program (4) comprising instructions which, when the program is executed by a computing hardware device (1), cause the computing hardware device (1) to carry out the method of one of the claims 1 to 26.

29. Computer-readable medium (5) comprising instructions which, when executed by a computing hardware device (1), cause the computing hardware device (1) to carry out the method of one of the claims 1 to 26.
